# EUROPEAN PATENT APPLICATION

(11) **EP 4 621 082 A1**
(43) Date of publication of application: **24.09.2025**
(21) Application number: 25163312.9
(22) Date of filing: 12.03.2025
(51) Int. Cl.: C22B 5/12, C22B 21/00, C22B 21/02, C22B 21/06, F23D 14/00, F27B 3/20, F27B 3/28, F27D 3/16, F27D 19/00, C25B 1/044

(54) **HYDROGEN ADDITIVATION TO THE BURNERS OF MELTING FURNACES FOR METAL RECYCLING**

(30) Priority: 20.03.2024 IT 202400006253
(71) Applicant: Sala, Maurizio, 20011 Corbetta MI (IT)
(72) Inventor: Sala, Maurizio, 20011 Corbetta MI (IT)
(74) Representative: Mittler, Andrea

(57) **Abstract**

Apparatus (1) for metal smelting, wherein the metals processed in the smelting furnace are recycled metals, preferably recycled aluminium, comprising:
- a smelting furnace comprising one or more burners (5) fed with methane from the network and air supplied by an atmospheric air blower (6) for intended for combustion;
- a water electrolyser (4) capable of producing a mixture of gaseous hydrogen and oxygen; such gases being immediately conveyed to the burner (5) without interposition of storage tanks;
characterised in that
said water electrolyser (4) is powered by a solar panel (2),
further comprising batteries for storing the electric energy generated by said solar panel (2).

Such apparatus further comprises a system adjusting the supply of gaseous hydrogen and oxygen using sensor measuring the quantity of carbon dioxide, carbon monoxide, nitrogen oxides, particulate matter generated during furnace operation.

## Description

The present invention relates to melting furnaces for metal processing. In particular, the present invention relates to the additivation of gaseous hydrogen and oxygen to the combustible supplied to the melting furnace, so as to reduce the consumption of hydrocarbons, in particular of methane, used to heat the melting furnace, and moreover to reduce the production of greenhouse gas and harmful gas, in particular carbon dioxide. E.g., such melting furnaces are used in the production of primary and recycled metals, preferably recycled aluminium.

In the following description, explicit reference will be made to an apparatus for aluminium recycling; nonetheless, as is clear for the skilled person, the concepts here illustrated can be used for melting furnaces capable of melting any primary or recycled metal. Indicatively, such melting furnaces are heated to temperatures higher than 600 °C, according to the metal to be processed.

Aluminium is the third most common metal on earth crust. It is extracted from minerals wherein it is combined with other elements like sulphur, silicon, and oxygen. Bauxite is one of the materials most rich in aluminium; in order to obtain primary aluminium bauxite is used industrially, wherein there is provided 40-60% of Al₂O₃ with other elements from which it has to be separated.

Nowadays, a relevant fraction of the aluminium used industrially comes from aluminium recycling (secondary aluminium). This because producing 1 kg of recycled aluminium requires less than 1 kWh, in comparison to 13-14 kWh for the production of primary aluminium.

The melting point of aluminium is 660,32°C, and as a consequence of this, the melting furnaces used for the primary or secondary aluminium must work at higher temperatures. In a known way, the melting furnaces used for aluminium processing according to the present invention work at an operating temperature higher than 650°C.

In the art, it is known supplying such melting furnaces with a variety of hydrocarbons, coal, solid fuels, fuels derived from petrol, among which methane (CH₄). Methane is an excellent fuel, in that it is provided with a high calorific value. When burning methane, the chemical reaction is

CH₄ + 2O₂ → CO₂ + 2H₂O I

The use of methane as fuel inevitably leads to the production of a corresponding quantity of carbon dioxide (CO₂). The present atmospheric concentration of carbon dioxide is about 0,04%, and has increased with respect to the pre-industrial levels, wherein it was stably at about 0,03%. It is believed that this rapid increase is due to human activities. The abundance of gaseous carbon dioxide overheats the atmosphere through a phenomenon known as greenhouse effect, according to which the electromagnetic radiation coming from the sun would generate a higher heat with respect to the heat outgoing from earth, so gradually generating an overheating of earth. Carbon dioxide, with other greenhouse gases, would be responsible for the decrease of outgoing heat.

Moreover, during methane combustion, carbon monoxide (CO) can be produced, too, due to an incomplete combustion of the organic fuel, e.g. due to an insufficient supply of air. As known, carbon monoxide is markedly toxic, as it bonds to haemoglobin forming a complex called carboxyhemoglobin, that is 300 times more stable than the oxyhemoglobin that is normally generated during the transportation of oxygen in blood. Deaths due to the malfunctioning of domestic heaters or boilers are due to the formation of carboxyhemoglobin, that progressively leads to death for anoxia.

In an effort for limiting the production of greenhouse gas deriving from the combustion of petrol-based fuels, recently other fuels have been introduced, like gaseous hydrogen (H₂). The chemical reaction that occurs when burning hydrogen is

2H₂ + O₂ → 2H₂O II

The combustion of hydrogen generates only water, so eliminating CO₂ emissions and the associated climatic-environmental problems. Using gaseous hydrogen as fuels has different advantages. Hydrogen burns at air when its concentration ranges 4-75% of its volume, while methane burns at concentrations ranging 5.4-15%. The temperature of spontaneous combustion is 585°C for hydrogen, while for methane is 540°C. Methane explodes at concentrations ranging 6.3-14%, while gaseous hydrogen requires concentration ranging 13-64%.

The decomposition of water by electrolysis has been known since 1800. The chemical reaction of electrolysis is

2H₂O → 2H₂ + O₂ III

During electrolysis double the number of hydrogen moles is generated with respect to the number of oxygen moles.

It is also known that atmosphere contains about 78% of nitrogen (N₂): when melting furnaces are supplied with atmospheric air, at high temperatures nitrogen reacts with the oxygen in the air, so generating nitrogen oxides (nitric oxide (NO), nitrogen dioxide (NO₂, also as dimer N₂O₄), dinitrogen pentoxide or nitric anhydride (N₂O), dinitrogen trioxide or nitrous anhydride (N₂O₃) and dinitrogen pentoxide or nitric anhydride (N₂O₅)), jointly known as NOₓ.

Nitrogen oxides (NOₓ), especially nitrogen dioxide, are atmospheric polluting agents and worsen the conditions of asthmatics, children and patients suffering from chronic respiratory diseases or cardiac diseases. Nitrogen trioxide and pentoxide are soluble in water, and with atmospheric humidity can form nitrous acid and nitric acid, both present in the so-called "acid rains".

Particulate Matter (PM) means solid or liquid substances suspended in the air, having dimensions from few nanometres to 100 µm. Particulate matter is one of the most frequent pollutant in urban areas. Examples of substances present in particulate matter are natural and artificial fibres, pollens, spores, carbon particles, metals, silica and liquid pollutants. Particulate matter is dangerous for the health of both humans and other living beings. The International Agency for Research on Cancer (IARC) and the World Health Organization (WHO) have classified particulate matter as cancerogenic, i.e. capable of causing cancer or favouring its onset and propagation. Moreover, it has been defined like the most dangerous form of atmospheric pollution, due to its capacity of penetrating into lungs and brain from blood, so causing cardiac diseases, respiratory diseases and early deaths. In particular, it is the sixth cause of early death in the world. Moreover, particulate matter can negatively affect climate and rainfall. The origin of such substances can be natural or associated to human activities, in particular to combustion processes (combustion engines, heating systems, industrial activities). Particulate matter is generated proportionally to the quantity of unburned hydrocarbons, in their turn deriving from an insufficient supply of oxygen.

Melting furnaces require a high energy consumption for their supply. Non-casually a significant production centre of primary and secondary aluminium, metal and glass processing is placed in Persian Gulf, thanks to the ease of supply and low cost of hydrocarbons in that region. In countries like Italy, wherein the procurement costs of fuels represent a highly significant share of industrial costs, reducing fuel consumption for supplying melting furnaces working at high temperature is mandatory.

US 2022/057084 A1 describes a system for neutralizing all or part of the generation of polluting and toxic gases such as NOₓ, CO₂ or CO, and for reducing the cost of fossil fuel in boilers, ovens, etc. Such system provides at least one device for producing hydrogen and/or oxygen by water electrolysis; at least an injection system connected to at least one fuel and/or oxidant inlet of the combustion apparatus, said system being able to inject at such an inlet gases coming from said device for producing hydrogen and/or oxygen by water electrolysis, and/or a mixture of these gases as well as a fuel fluid and/or an oxidant fluid; a local electronic module connected to the device for producing hydrogen and/or oxygen by water electrolysis, to the combustion apparatus and/or to sensors equipping the facility, said module controlling the production device and/or the injection system as a function of at least one piece of information coming from the combustion apparatus and/or the sensors of the facility. The electrolyser can be powered by a renewable energy source such as solar (photovoltaic panels). The water undergoing electrolysis can be distilled water. The production of gaseous hydrogen/oxygen is carried out onsite. The system also includes a local storage system capable of storing all or part of the surplus hydrogen and/or oxygen generated through electrolysis.

The paper by Bailera Manuel et al: "A review on CO2 mitigation in the Iron and Steel industry through Power to X processes", Journal of CO2 Utilization, 2021; vol. 46:1-30 describes a systematic review of Power to X processes applied to the iron and steel industry. The working temperature for the furnaces used for processing iron are >2000 °C. The hydrogen produced through water electrolysis is not used with natural gas as direct fuel, but it is used alternatively for:
- producing syngas
- for methanation
- for direct reduction or as reducing agent in the production of iron.
The gaseous oxygen generated with gaseous hydrogen is used for obtaining an oxidizing gas allowing the use of a lower quantity of air.

WO2019007908A1 describes a furnace used for the production of iron or steel in a plant processing iron minerals. Such furnace comprises a water electrolyser producing hydrogen (as reducing agent) and oxygen (as oxidizing agent), which are both used in the furnace. Hydrogen and oxygen can be generated through different kinds of electrolysis, while the electric energy used for electrolysis is preferably obtained through a low carbon footprint technology. Solar energy is quoted only as one of the possible renewable sources of electric energy.

WO2023212816A1 describes a system for producing thermal energy comprising an electrolyser for electrolysing water, producing a flow of hydrogen that is provided to a furnace configured to burn gaseous hydrogen produced by the electrolyser. The document is silent on the management of H₂ and O₂ buildup.

The present invention tackles the technical problem of reducing methane consumption in melting furnaces for aluminium recycling, and moreover of reducing the production of CO₂ and other noxious substances like NOₓ.

Such aim is obtained with an apparatus for metal melting having the features defined in claim 1.

The apparatus for metal melting comprises a melting furnace supplied with a mixture of methane and a mixture of gaseous hydrogen and oxygen generated at the time.

A normal burner of a melting furnace can burn methane, indicatively producing 1 MW of heating power, equal to 100 Nm3/h of consumed methane.

According to the invention, the burner can be supplied with variable percentages of methane and hydrogen, e.g. 80-90% of methane from distribution system and 20-10% of a mixture of gaseous hydrogen and oxygen (H₂ 67% and O₂ 33% in volume) generated at the time through demineralized water hydrolysis. The device for the reaction of electrolysis and preferably also the demineralizer are supplied with solar energy generated through solar panels.

In a preferred embodiment, at least part of the solar energy generated through solar panels is stored in suitable batteries so as to allow the continuous working 24h/24h of the apparatus according to the present invention.

In fact, the melting furnace according to the invention burns 70 Nm3/h of methane and 10 Nm3/h of a H₂+O₂ mixture generated at the time (6,7 Nm3/h H₂ e 3,3 Nm3/h O₂).

The power required from photovoltaic panels to supply the electrolysis device and water demineralizer is 40 electric KW.

By using the melting furnace supplied with 10% of gaseous hydrogen according to the present invention, a reduction of polluting emissions is obtained:
- CO: -40%
- CO₂: -35%
- NOₓ: -40%
- PM: -40%
It is worth mentioning that the reduction of all polluting emissions is proportional to the quantity of gaseous hydrogen and oxygen supplied to the burner.

The present invention is provided with many advantages.

The first advantage is the remarkable economic saving during the working of the furnace, due to the reduction up to 40% of methane consumption with respect to a normal melting furnace supplied with just methane. Moreover, once the cost of the plant generating the H₂+O₂ mixture is amortized, a constant reduction of the supplying costs of the melting furnace is obtained.

The second advantage is still an economic advantage, in that operating the water electrolysis device by using solar energy, the energy supply costs of the melting furnace are further reduced.

The third advantage is linked to hydrogen combustion, which on the one hand generates an important reduction in the generation of CO₂ and on the other hand reduces the consumption of methane. In particular, the use of 10% of H₂ reduces by 30% the consumption of CH₄ and reduces by 35% the emission of CO₂. Experimentally, the use of 15% of gaseous H₂ lead to even better results.

The fourth advantage is the reduction of NOₓ generation, due to the use of O₂ generated through electrolysis, allowing to reduce the quantity of atmospheric air (containing nitrogen) that is burned in the melting furnace.

The fifth advantage is the reduced generation of PM due to the fact that, thanks to the presence of oxygen, the combustion is complete.

The sixth advantage is that hydrogen is generated at the time of its use, with a marked simplification of the plant, not needing storing reservoirs of gaseous hydrogen and oxygen. Moreover, overall this makes the plant safer, with reduced risks of explosion linked to the compression of hydrogen needed to store it.

A further advantage is the possibility to perform a "retrofit" on already existing aluminium melting furnaces supplied with methane, to which just the portion providing to water electrolysis and electric energy generation from sun has to be added in order to reduce energy consumption and to reduce the production of pollutants. To the plant only injectors suitable for burning both methane and gaseous hydrogen need be added. In other words, gaseous hydrogen and methane are mixed upstream the injector and the burner. The oxygen injector is a separate injector.

Further advantages and properties of the present invention are disclosed in the following description, in which exemplary, non-limiting embodiments of the present invention are explained in detail based on the drawing:

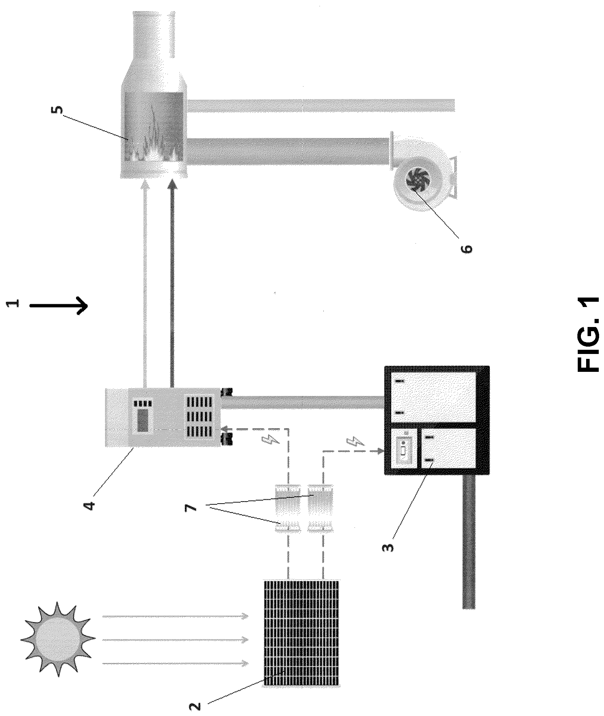

figure 1 shows a schematic diagram of the melting furnace according to the present invention.

Figure 1 shows an apparatus overall indicated with 1 comprising a melting furnace according to the invention.

The burner 5 of the melting furnace is a customary at least 1MW burner, preferably a 2 MW burner, suitable for burning methane but also a mixture of H₂+O₂. Indicatively, said burner 5 consumes 65-70 NMC/h of methane. Methane comes from the distribution system.

In case of retrofit, just the injector burning methane only has to be replaced with a burner suitable for burning a mixture of hydrogen and methane, and an injector suitable for providing oxygen has to be added.

In addition to methane, the burner 5 burns said H₂+O₂ mixture generated at the moment through a device 4 providing water electrolysis. Water comes from water network; preferably, network water is demineralized through a known demineralizer 3, so as to remove its saline content and to provide water to the electrolysis device 4. In practice, network water is fully demineralized and then additivated with a suitable catalyser that allows the electrolysis to occur, because the electrolysis of fully demineralized water is not possible in that it does not conduct electricity. Catalysers used to this aim are e.g. sulphuric acid or sodium sulphate. Indicatively, the consumption of water is 13 L/h.

Said electrolysis device 4 can generate at the moment of use a constant flow of a H₂+O₂ mixture that is immediately conveyed to the burner 5 through suitable piping. Said mixture contains 6.7 MC/h of hydrogen and 3.3 MC/h of oxygen in volume, which are burned through the burner 5, replacing a share of methane.

Advantageously, both the demineralizer 3 of water, and the electrolysis device 4 are supplied by a solar panel 2, capable of generating 40 KW.

In the preferred embodiment, the apparatus 1 further comprises batteries 7, allowing the storing of the electric energy generated by the solar panel 2, so as to allow the continuous operation (i.e. during night-time or in case of bad weather) of both the demineraliser 3 and the water electrolysis device 4.

Advantageously, the apparatus 1 comprises an adjusting system for the gaseous supplies to the burner 5. There is provided a computerized control system capable to start the heating of the melting furnace and adding the gaseous hydrogen when the melting furnace has reached its operating temperature. Moreover, the generation of gaseous hydrogen and oxygen through the electrolysis device is modulated according to the actual needs. The control system allows to adjust the replacement of a share of methane with a share of gaseous hydrogen indicatively ranging 10-15% in volume with respect to methane. The supply of gaseous oxygen generated through the electrolysis allows to reduce the supply of air from the environment. In practice, such adjusting mechanism of the supply of various gases to the combustion chamber occurs placing specific sensors, e.g. sensors capable of measuring the content in CO and/or CO₂ and/or NOx. The adjusting mechanism is provided with an automatic feed-back mechanism, allowing to adjust the supply of methane and gaseous hydrogen and oxygen. Obviously, as no storing of gaseous hydrogen and oxygen obtained through electrolysis is provided, such feed-back mechanism directly acts on water electrolysis.

Advantageously, the burner 5 is further supplied with atmospheric air, which is forced into the burner through a known blower 6 for combustion air. Indicatively, in a furnace unable to burn gaseous hydrogen, the consumption of air by reason of methane consumption is in a ratio of 1 m³ of methane: 10 m³ of air. As atmospheric air contains about 21% of gaseous oxygen, the consumption of atmospheric air in the melting furnace is reduced by 5-10 times, when the burner is supplied with gaseous oxygen obtained by water electrolysis.

In the normal operation of the melting furnace, the heating of the furnace occurs through burning methane only; once the melting furnace has reached its operating temperature, the flow of gaseous hydrogen and oxygen starts, replacing initially about the 10% of methane provided to the burner. Successively, when the burner is stabilized, an even higher percentage of gaseous hydrogen and oxygen can be provided, up to replacing about 15% of the methane provided to the burner. This allows to further improve the methane consumption and the production of pollutants.

In a further embodiment, further gaseous oxygen can be provided to the burner 5 obtained through industrial production (from gas cylinders) so as to be sure that no unburned hydrocarbons are due to an insufficient supply of oxygen, and therefore that no particulate matter is generated. In this case, the consumption of atmospheric air by the burner is further reduced.

## Claims

1. Apparatus (1) for metal smelting, wherein the metals processed in the smelting furnace are recycled metals, preferably recycled aluminium, comprising:
- a smelting furnace comprising one or more burners (5) fed with methane from the network and air supplied by an atmospheric air blower (6) for intended for combustion;
- a water electrolyser (4) capable of producing a mixture of gaseous hydrogen and oxygen; such gases being immediately conveyed to the burner (5) without interposition of storage tanks;
**characterised in that**
said water electrolyser (4) is powered by a solar panel (2),
further comprising batteries for storing the electric energy generated by said solar panel (2).

2. Apparatus (1) for metal smelting according to claim 1, further comprising a demineralizer (3) for the water supplied to said water electrolyser (4), preferably said demineralizer being powered by said solar panel (2).

3. Apparatus (1) for metal smelting according to claim 1, comprising a system for adjusting water electrolysis according to the need of gaseous hydrogen and oxygen by the burner (5), preferably a computerized system allowing to adjust the supply of gases chosen from the group consisting in oxygen, hydrogen, atmospheric air, methane supplied to said burner (5).

4. Apparatus (1) for metal smelting according to claim 1, wherein the working temperature of said burner is higher than 600°C.

5. Kit for retrofitting an already existing smelting furnace, comprising a water electrolyser (4) for generating a fresh mixture of gaseous hydrogen and oxygen, an optional water demineraliser (3), a solar panel (2) capable of powering them, and one or more batteries (7) for the storage of the electric energy generated by said solar panel, said components being added to an already operating smelting furnace.

6. Method for the working of an apparatus (1) according to one or more of the claims 1 to 5, comprising the following steps:
- at the beginning till to working temperature, feeding the burner (5) only with methane;
- once the burner has reached its working temperature, starting the production of gaseous hydrogen and oxygen through electrolysis;
- replacing a portion of methane with the flow of gaseous hydrogen generated in the previous step.

7. Method for the working of an apparatus (1) according to claim 6, further comprising the following steps:
- measuring, through suitable sensors, the quantity of carbon dioxide, carbon monoxide, nitrogen oxides, particulate generated during the working of the burner;
- adjusting the supply of methane and of gaseous hydrogen and oxygen to the burner, in particular adjusting water electrolysis.
